# EUROPEAN PATENT APPLICATION

(11) **EP 1 592 180 A2**
(43) Date of publication of application: **02.11.2005**
(21) Application number: 05009366.5
(22) Date of filing: 28.04.2005
(51) Int. Cl.: H04L 12/413

(54) **Ethernet MAC adaptation for real-time services**

(30) Priority: 29.04.2004 KR 2004030022
(71) Applicant: SAMSUNG ELECTRONICS CO., LTD., Suwon-si, Gyeonggi-do (KR)
(72) Inventor: Lim, Se-Youn, c/o Samsung Electronics Co., Ltd., Suwo-si, Gyeonggi-do (KR); Kwon, Seo-Won, c/o Samsung Electronics Co., Ltd., Suwo-si, Gyeonggi-do (KR); Song, Jae-Yeon, c/o Samsung Electronics Co., Ltd., Suwo-si, Gyeonggi-do (KR)
(74) Representative: Grünecker, Kinkeldey, Stockmair & Schwanhäusser Anwaltssozietät

(57) **Abstract**

An Ethernet protocol hierarchical structure for simultaneously providing real-time and non-real-time services is disclosed. The Ethernet media access control adaptation apparatus for real-time services performs operations between MAC layers and a MAC client for adapting synchronous Ethernet, in which real-time and non real-time services can be simultaneously provided based on an Ethernet MAC. The Ethernet MAC adaptation apparatus for connecting upper client equipment to lower Ethernet MAC equipment and providing real-time services using Ethernet includes a real-time data transmission/reception unit for performing a data transmission/reception from the upper client equipment in real-time, a non-real-time data transmission/reception unit for performing a data transmission/reception from the upper client equipment in non-real-time, a data scheduling unit for performing a transmission scheduling based on characteristics of input data each of which is inputted to the real-time and non-real-time data transmission/reception units, and an Ethernet data transmission/reception unit for transmitting the data to the lower Ethernet MAC equipment according to the schedule of the data scheduling unit, and classifying the data from the lower Ethernet MAC equipment according to the characteristics of the data thereof.

## Description

The present invention relates to an Ethernet protocol hierarchical structure, and more particularly to an Ethernet protocol hierarchical structure for simultaneously providing real-time and non-real-time services.

Ethernet is a very common means of communicatively connecting computers in a LAN (Local Area Network). The Ethernet specification serves as the basis for the IEEE (Institute of Electrical and Electronics Engineers) 802.3 standard. An Ethernet LAN card is generally connected to computers using coaxial cables or an unshielded twisted pair wire with a specific grade.

The most commonly installed Ethernet systems are called 10BASE-T, providing data transmission speed up to 10Mbps. The Ethernet systems are connected to the other systems by the cables. The Ethernet systems can access other systems using CSMA/CD (Carrier Sense Multiple Acccess/Collision Detect) protocol defined in the IEEE 802.3. Fast Ethernet LANs, or 100BASE-T, supporting transmission speed up to 100Mbps, are used in a backbone of the LANs for supporting workstations in which 10BASE-T cards are installed. Gigabit Ethernet supports data transmission speed greater than 1,000Mbps in a backbone.

Since the Ethernet systems can access other systems using the CSMA/CD (Carrier Sense Multiple Access/Collision Detect) protocol defined in the IEEE 802.3, the conventional Ethernet generates service frames of upper layer in an Ethernet frame format and transmits the same to the other layer while an IFG (Inter Frame Gap) is maintained. The generated service frames of the upper layer in an Ethernet frame format are transmitted based on generation sequence regardless of types of the service frames of upper layer.

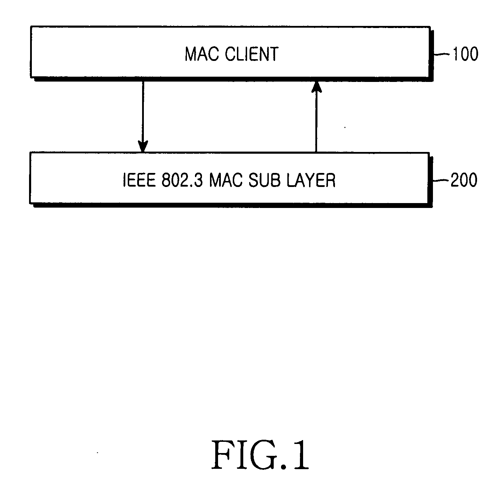

Fig. 1 is a diagram illustrating a conventional Ethernet hierarchical structure with service primitive between layers included therein.

As shown in Fig. 1, the Ethernet hierarchical structure includes an MAC (Media Access Control) client 100, as an upper layer, for providing Ethernet services, and an IEEE 802.3 MAC sub-layer 200 for receiving data from the MAC client layer 100 to generate Ethernet frames and transmitting the same to the other layer.

A service primitive, referred to as an MA_DATA.request and an MA_DATA.indication, is defined between the MAC client 100 and IEEE 802.3 MAC sub-layer (hereinafter, referred to as a MAC layer) 200 for transmitting data. The MA_DATA.request is used for transmitting frames, and the MA_DATA.indication is provided for receiving frames.

If the data to be transmitted occurs in the MAC client 100, the MA_DATA_request is transmitted to the MAC layer 200. Then, if the MAC layer 200 is in a transmitable state, it encapsulates data from the MAC client 100 in an MAC frame and transmits it to the other layer.

Meanwhile, Ethernet frames received in the MAC layer 200 are transmitted to the MAC client 100 by using the MA_DATA.indication.

Ethernet, according to the basis for the IEEE 802.3 standard, is defined such that data can be transmitted to other layers based on a service occurrence order regardless of types of services. The CSMA/CD protocol, used in conventional Ethernet, allows systems to access the other systems regardless of the using sequence.

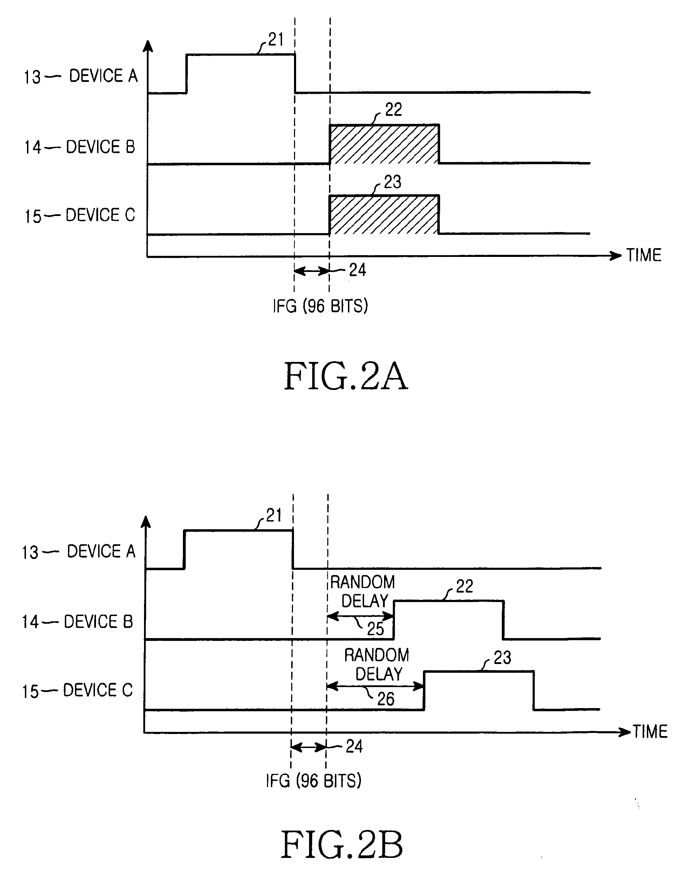

Figs. 2a to 2b are waveforms illustrating a processing method using the CSMA/CD protocol in the conventional Ethernet.

As shown in Fig. 2a, if there are operations 22 and 23 to transmit packets in a B device 14 and a C device 15, respectively, via a network while an A device 13 has already performed an operation 21 for transmitting packets via the network, the B device 14 and C device 15 should be await to transmit their packets by IFG (InterFrame Gap) (24) after the operation 21 of the A device 12 is terminated.

Since the B device 14 and C device 15 simultaneously transmit their packets to the other sides, there is a collision. A method for processing the collision will be described with reference to Fig. 2b. If the B device 14 and C device 15 detect a collision, they delay transmission by respective random delays 25 and 26 from a time point of IFG 24, respectively. More specifically, when a collision occurs, the B and C devices 14 and 15 detect obstruction such that they transmit a series of 'Jam' bit sequence through a network. The 'Jam' bit sequence causes the other devices desiring packet transmission to detect the collision. If so, the other devices delay respective random delays and then make an attempt to transmit packets. An initial stage is repeated in all the devices.

Referring to Fig. 2b, since the random delay 25 of the B device 14 is shorter than the random delay 26 of the C device 15, the operation 22 for transmitting the packet in the B device 14 is performed earlier than that of the C device 15.

While, Ethernet is one of most common techniques for communicating data between terminals through a LAN. The Ethernet technique is not suitable for transmission of moving pictures or voice data which are sensitive to transmission time delay. In association with such a problem, a technique for synchronously transmitting data such as image and voice has been actively researched and developed based on the prior art Ethernet. This technique is called synchronous Ethernet.

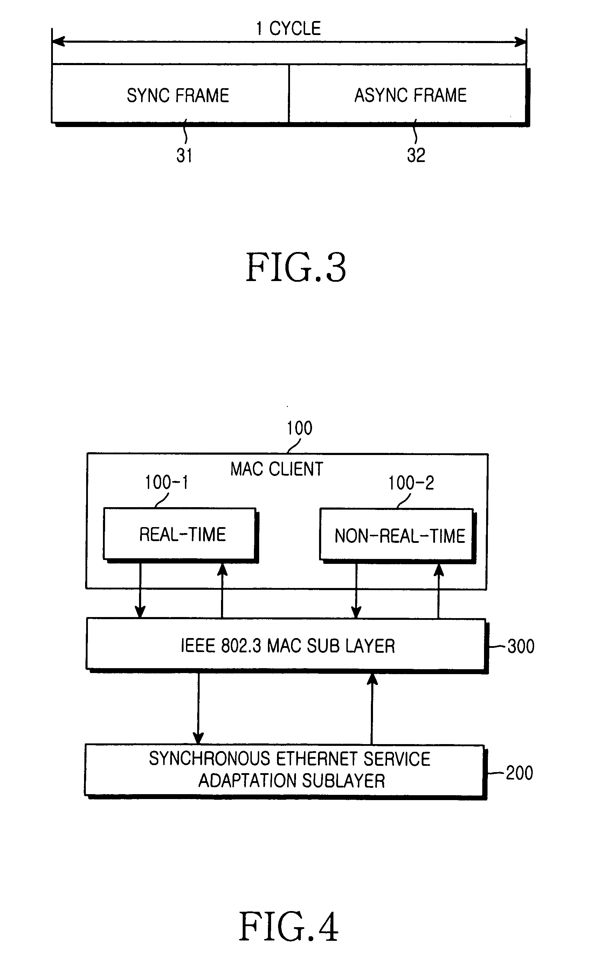

Fig. 3 is a diagram illustrating a transmission frame structure based on one transmission cycle used in a general synchronous Ethernet.

As shown in Fig. 3, the transmission frame based on one transmission cycle includes a Sync data part 31 for transmitting synchronous data and an Async. frame part 32 for transmitting asynchronous data. The transmission cycle of the transmission frame is, for example, 125µs.

The Synch data part 31 for transmitting synchronous data has a higher priority in the transmission cycle. According to a currently proposed standard (which may be changed in the future), the Sync data part 31 includes a plurality of 738-byte sub-synchronous frames, basically 10.

The Async data part 32 for transmitting asynchronous data may include variable asynchronous data based on frame units.

However, the conventional CSMA/CD protocol used in the Ethernet layer structure of Fig. 1 cannot be performed in such synchronous Ethernet. Because the transmission frame is classified into Async data and Sync data, and each of the Async data and Sync data needs to be allocated by frames. Accordingly, if the conventional Ethernet layer structure as shown in Fig. 1 is employed to use the synchronous Ethernet, all the operations of the MAC layer 200 must be newly defined and also the conventional Ethernet MAC equipment must be replaced with new equipment.

It is the object of the present invention to provide an Ethernet media access control adaptation apparatus for real-time services capable of performing operations between MAC layers and a MAC client for adapting synchronous Ethernet, in which real-time and non real-time services can be simultaneously provided based on an Ethernet MAC.

This object is solved by the subject matter of the independent claims.

Preferred embodiments are defined in the dependent claims.

One embodiment of the present invention is directed to an Ethernet MAC adaptation apparatus for connecting upper client equipment to lower Ethernet MAC equipment and providing real-time services using Ethernet. The apparatus includes a real-time data transmission/reception unit for performing data transmission/reception from the upper client equipment in real-time, a non-real-time data transmission/reception unit for performing data transmission/reception from the upper client equipment in non-real-time, a data scheduling unit for performing transmission scheduling based on characteristics of input data each of which is input to the real-time and non-real-time data transmission/reception units. The apparatus also includes an Ethernet data transmission/reception unit for transmitting the data to the lower Ethernet MAC equipment according to the schedule of the data scheduling unit, and classifying the data from the lower Ethernet MAC equipment according to the characteristics of the data thereof.

Another embodiment of the present invention is directed to a data transmission method for providing real-time service through an Ethernet MAC adaptation apparatus for connecting upper client equipment to lower Ethernet MAC equipment and providing real-time services using Ethernet. The method includes the steps of confirming whether data can be transmitted to the lower Ethernet MAC equipment, determining whether the data can be transmitted based on real-time or non real-time data transmission, if the data can be transmitted thereto, receiving the data in real-time from the upper client equipment if the data can be transmitted based on real-time data transmission time, or the data in non real-time from the upper client equipment if the data can be transmitted based on non real-time data transmission, and requesting data to the lower Ethernet MAC equipment, if the data based on one cycle for transmission is received based on a result of the receiving, and sending same.

The above and other aspects, embodiments and other advantages of the present invention will be more clearly understood from the following detailed description taken in conjunction with the accompanying drawings, in which:
Fig. 1 is a diagram illustrating a conventional Ethernet layer structure, describing service primitive between layers;
Figs. 2a to 2b are waveforms illustrating a processing method using the CSMA/CD protocol in the conventional Ethernet;
Fig. 3 is a diagram illustrating a transmission frame structure based on one transmission cycle, used in a general synchronous Ethernet;
Fig. 4 is a diagram illustrating an Ethernet layer structure according to one embodiment of the present invention; and
Fig. 5 is a flow chart illustrating a data transmission method in a synchronous Ethernet service adaptation sublayer according to one embodiment of the present invention.

Now, embodiments of the present invention will be described in detail with reference to the annexed drawings. In the drawings, the same or similar elements are denoted by the same reference numerals even though they are depicted in different drawings. In the following description, a detailed description of known functions and configurations incorporated herein will be omitted when it may obscure the subject matter of the present invention. Also, the terms used in the following description are terms defined taking into consideration the functions obtained in accordance with the present invention.

Fig. 4 is a diagram illustrating an Ethernet layer structure according to one embodiment of the present invention.

As shown in Fig. 4, the Ethernet layer structure includes an MAC client 100 as an upper layer, an IEEE 802.3 MAC sub layer 200 for inputting data from the MAC client 100 and generating Ethernet frames to be transmitted, and a synchronous Ethernet Service Adaptation sublayer 300 which supports data processing in a synchronous Ethernet manner in the MAC layer based on scheduling operations for the real-time and non-real-time data. The synchronous Ethernet Service Adaptation sublayer 300 is positioned between the MAC client 100 and the MAC sub layer 200. The MAC client 100 includes a real-time MAC client 100-1 for transmitting real-time data and a non real-time Client 100-2 for transmitting non real-time data.

The operations of the synchronous Ethernet Service Adaptation sublayer 300 will now be described. A service primitive function is performed by requesting a service based on classification for the real-time MAC client 100-1 and the non real-time MAC client 100-2. It requests a service to the IEEE 802.3 MAC sub layer 200 based on classification of services for real-time and non real-time data. It also schedules the real-time and non real-time data for synchronizing transmission and reception, and transmits it to the IEEE 802.3 MAC sub layer (hereinafter, referred to a MAC layer) 200.

The synchronous Ethernet Service Adaptation sublayer 300 uses the conventional IEEE 802.3 MAC standard as a service interface to interface with the MAC layer 200.

An MA_DATA.request and an MA_DATA.indication as a service primitive for transmitting data are defined between the Ethernet Service Adaptation sublayer 300 and the MAC layer 200. The MA_DATA-request is used for transmitting frames, and the MA DATA.indication is used for receiving frames. Their operations are the same as that of the prior art, therefore a detailed description thereof will be omitted.

However, a new service primitive is defined between the synchronous Ethernet Service Adaptation sublayer 300 and the MAC layer 100. The new service primitive includes an MA_DATA_SYNC.request for requesting data based on real-time data, an MA_DATA_ASYNC.request for requesting data based on non real-time data, an MA_DATA_SYNC.indication for indicating data reception based on real-time data, and an MA_DATA_ASYNC.indication for indicating data reception based on non real-time data.

With reference to the configuration of the service primitive, its operations will be described as the following.

If the real-time MAC client 100-1 has data to be transmitted, it requests the synchronous Ethernet Service Adaptation sublayer 300 using the MA_DATA_SYNC.request. When the non real-time MAC client 100-2 has data to be transmitted, it request the synchronous Ethernet Service Adaptation sublayer 300 using the MA_DATA_ASYNC.request.

The synchronous Ethernet Service Adaptation sublayer 300 having been requested performs a request operation for the MAC layer 200 using the MA_DATA.request.

The synchronous Ethernet Service Adaptation sublayer 300 performs a scheduling operation to form a transmission frame as shown in Fig. 3. The MAC layer 200 processes data based on a CSMA/CD manner to configure frames. The synchronous Ethernet Service Adaptation sublayer 300 performs the scheduling operation for real-time and non real-time data such that the frame as shown in Fig. 3 can be configured to a synchronous Ethernet frame. Meanwhile, since scheduling is different depending on characteristics of systems and scheduling operations are also different therefrom, a detailed description of the configuration and operation of the scheduling will be omitted.

Meanwhile, transmission is performed based on a cycle unit. One cycle is divided into real-time and non real-time intervals, and then a corresponding service primitive is selected and then transmitted to the MAC layer 200.

If the MA_DATA.indication is received from the MAC layer 200, the type of frames is classified. If the type of the frames is real-time data, the synchronous Ethernet Service Adaptation sublayer 300 acknowledges reception of the real-time MAC client 100-1 using an MA_DATA_SYNC.indication. On the other hand, if the type of the frames is non real-time data, the synchronous Ethernet Service Adaptation sublayer 300 acknowledges reception of the non real-time MAC client 100-2 using an MA_DATA._ASYNC.indication.

As such, the synchronous Ethernet Service Adaptation sublayer 300 can be implemented with an Ethernet MAC adaptation apparatus for real-time service in respective pieces of Ethernet equipment.

To perform operations of the synchronous Ethernet Service Adaptation sublayer 300, the Ethernet MAC adaptation apparatus for providing real-time services includes a real-time data transmission/reception unit for performing data transmission/reception from the upper client equipment (for example, a real-time MAC client 100-1) in real-time, a non-real-time data transmission/reception unit for performing a data transmission/reception from the upper client equipment (for example, a non real-time MAC client 100-2) in non-real-time, a data scheduling unit for performing transmission scheduling based on characteristics of input data each of which is input to the real-time and non-real-time data transmission/reception units, and an Ethernet data transmission/reception unit for transmitting the data to lower Ethernet MAC equipment (for example, an MAC layer 200) according to the schedule of the data scheduling unit, classifying the data from the lower Ethernet MAC equipment according to the characteristics of the data thereof, and transmitting the classified data to the upper client equipment through the real-time data transmission/reception unit or non real-time data transmission/reception unit.

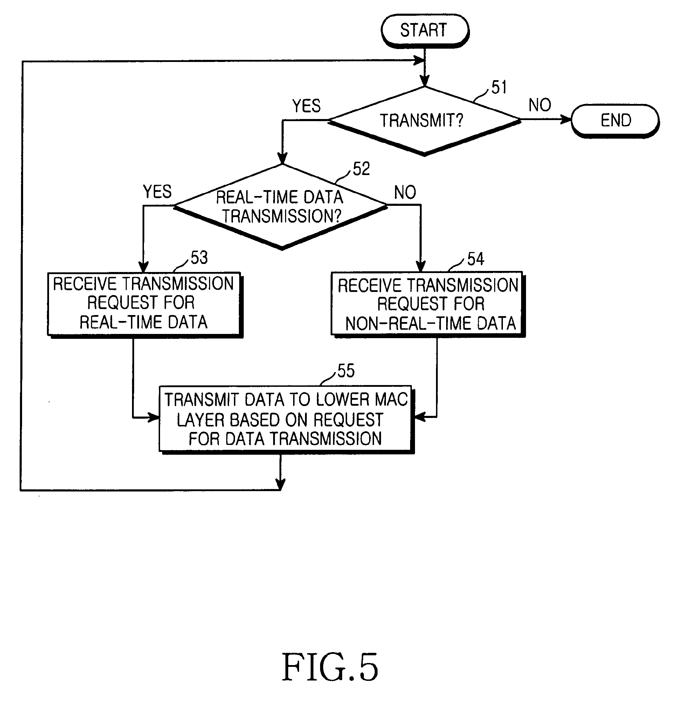

Fig. 5 is a flow chart illustrating a data transmission method in a synchronous Ethernet service adaptation sublayer according to one embodiment of the present invention.

As shown in Fig. 5, in order for the synchronous Ethernet Service Adaptation sublayer 300 to perform a data transmission operation, it confirms whether the lower Ethernet MAC equipment 200 can perform a data transmission operation in Step 51.

If the lower MAC layer 200 can perform the data transmission operation, the synchronous Ethernet Service Adaptation sublayer 300 determines whether the data transmission duration is for real-time data transmission or non real-time data transmission to schedule respective data in Step 52. In this embodiment of the present invention, since one transmission cycle configured with real-time data and non real-time data is transmitted to the lower MAC layer 200, it needs classification between the real-time and non real-time data.

If the data transmission duration is for real-time data transmission, the synchronous Ethernet Service Adaptation sublayer 300 receives a data transmission request for real-time data from the upper layer (namely, an MAC client 100) in Step 53. The data transmission request is received by an MA_DATA_SYNC.request.

Meanwhile, if the data transmission duration is for non real-time data transmission, the synchronous Ethernet Service Adaptation sublayer 300 receives a data transmission request for non real-time data from the upper layer (namely, MAC client 100) in Step 54. The data transmission request is received thereto by an MA_DATA_ASYNC.request.

If data of one transmission cycle is generated, the synchronous Ethernet Service Adaptation sublayer 300 requests a data transmission request to the lower MAC layer 200 using an MA_DATA.request and then transmits the data of one transmission cycle thereto in Step 55.

As mentioned above, the real-time service and non real-time service can be transmitted using the prior art Ethernet MAC layer.

Also, since real-time service can be provided through the conventional data transmission Ethernet, it can reduce the overall network construction cost.

Also, the data transmission method described above can be implemented with an electronic computer program suitable for storing in recording media such as a CD-ROM, a RAM, a floppy disc, a hard disk, an optical disc etc.

Although the embodiments of the present invention have been disclosed for illustrative purposes, those skilled in the art will appreciate that various modifications, additions and substitutions are possible, without departing from the scope of the invention as disclosed in the accompanying claims.

## Claims

1. An Ethernet MAC adaptation apparatus for connecting upper client equipment to lower Ethernet MAC equipment and providing real-time services using Ethernet, comprising:
a real-time data transmission/reception unit arranged to perform data transmission/reception from the upper client equipment in real-time;
a non real-time data transmission/reception unit arranged to perform data transmission/reception from the upper client equipment in non-real-time;
a data scheduling unit arranged to perform transmission scheduling based on characteristics of input data each of which is input to the real-time and non-real-time data transmission/reception units; and
an Ethernet data transmission/reception unit arranged to transmit the data to the lower Ethernet MAC equipment according to a schedule of the data scheduling unit, and classify the data from the lower Ethernet MAC equipment according to the characteristics of the data thereof.

2. The apparatus as set forth in claim 1, wherein the real-time data transmission/reception unit uses service primitive for performing a real-time data transmission/reception operation with respect to the upper client equipment, including:
an MA_DATA_SYNC.request for requesting data for real-time data; and
an MA_DATA_SYNC.indication for indicating data reception for real-time data.

3. The apparatus as set forth in claim 1 or 2, wherein the non real-time data transmission/reception unit uses service primitive for performing a non real-time data transmission/reception operation with respect to the upper client equipment, including:
an MA_DATA_ASYNC.request for requesting data for non real-time data; and
an MA_DATA_ASYNC.indication for indication data reception for non real-time data.

4. The apparatus as set forth in one of claims 1 to 3, wherein the Ethernet data transmission/reception unit is connected to the lower Ethernet MAC equipment using a carrier sense multiple access/collision detect protocol.

5. A data transmission method for providing real-time service through an Ethernet MAC adaptation apparatus for connecting upper client equipment to lower Ethernet MAC equipment and providing real-time services using Ethernet, the method comprising the steps of:
confirming whether data can be transmitted to the lower Ethernet MAC equipment;
if the data can be transmitted, determining whether the data can be transmitted based on real-time or non real-time data transmission;
receiving the data in real-time from the upper client equipment if the data can be transmitted based on real-time data transmission, or the data in non real-time from the upper client equipment if the data can be transmitted based on non real-time data transmission; and
requesting data to the lower Ethernet MAC equipment, if the data based on one cycle for transmission is received based on a result of the receiving, and sending the same.

6. The method as set forth in claim 5, wherein the step of receiving uses service primitive for performing a real-time data transmission/reception operation with respect to the upper client equipment, including:
an MA_DATA_SYNC.request for requesting data for real-time data; and
an MA_DATA_ASYNC.request for requesting data for non real-time data.
